# EUROPEAN PATENT APPLICATION

(11) **EP 4 749 790 A1**
(43) Date of publication of application: **27.05.2026**
(21) Application number: 25762448.6
(22) Date of filing: 18.02.2025
(51) Int. Cl.: H01M 50/24, H01M 50/249

(54) **BATTERY CASE, BATTERY PACK COMPRISING SAME, AND VEHICLE**

(30) Priority: 26.02.2024 KR 20240027526
(71) Applicant: LG Energy Solution, Ltd., Seoul 07335 (KR)
(72) Inventor: KANG, Dahoon, Daejeon 34122 (KR)
(74) Representative: Plasseraud IP
(86) International application number: PCT/KR2025/099440
(87) International publication number: WO 2025/183533

(57) **Abstract**

A battery case, according to the present invention, comprises: a pack frame configured to form a receiving space for a plurality of battery cells; a case lid configured to cover the receiving space; and a gasket interposed between the pack frame and the case lid. The gasket comprises: a plurality of coupling portions which are regions pressed by a fastening member, and at least one spacing portion which is located between two coupling portions which are adjacent to each other, wherein the thickness of a first point on the plurality of coupling portions may be different from the thickness of a second point on the at least one spacing portion.

## Description

### Technical Field

The present disclosure relates to a battery case, a battery pack and a vehicle including the same.

### Background Art

As the demand for portable electronic devices such as laptops, video cameras, and portable cell phones has sharply increased, and the commercialization of robots and electronic vehicles is in full swing, research on high-performance rechargeable batteries capable of repetitive charging and discharging is ongoing.

Rechargeable batteries commercialized at present include a nickel-cadmium battery, a nickel-metal hydride battery, a nickel-zinc battery, and a lithium rechargeable battery, and among them, since a memory effect, referring to a phenomenon where chargeable capacity of a battery decreases when charging the battery before the battery is completely discharged, rarely occurs in a lithium rechargeable battery compared to a nickel-based rechargeable battery, a lithium rechargeable battery is spotlighted for having advantages of being free to charge and discharge, having a low self-discharge rate, and having high energy density.

Such a lithium rechargeable battery mainly uses lithium-based oxide and a carbon material as a positive electrode active material and a negative electrode active material, respectively. A lithium rechargeable battery is provided with an electrode assembly, where a positive electrode plate and a negative electrode plate respectively coated with the positive electrode and negative electrode active materials are disposed with a separator in between, and an external material, in other words, a battery case, sealing and storing the electrode assembly with electrolyte.

Generally, a lithium rechargeable battery may be classified, depending on a shape of an external material, as a can-shaped rechargeable battery, where an electrode assembly is built in a metal can, and a pouch-type rechargeable battery, where an electrode assembly is built in a pouch made of an aluminum laminate sheet.

Recently, rechargeable batteries are widely used not only for small devices such as a portable electronic device but also for medium and large devices such as an electric vehicle or an energy storage system (ESS) for driving or storing energy.

Such rechargeable batteries are electrically connected to each other and stored inside a module case together to compose a battery module, and the battery modules are electrically connected in a compact space to increase energy density to compose a battery pack.

Such a battery case included in a battery module or a battery pack is provided with a gasket to seal an interior space. Airtightness is reduced at some parts of a gasket, and there has been a problem where gas produced internally leaks at the parts. Accordingly, the development of a battery case with improved airtightness and uniform airtightness throughout the entire area is necessary.

### Detailed Description of the Invention

### Technical Goals

The present disclosure is designed in consideration of the aforementioned problem and intended to provide a battery case with improved airtightness.

### Technical solutions

A battery case according to an example embodiment of the present disclosure may include a pack frame configured to form an accommodating space for a plurality of battery cells, a case lid configured to cover the accommodating space, and a gasket interposed between the pack frame and the case lid. The gasket may include a plurality of coupling parts that are areas pressed by a fastening member and at least one separation part located between two coupling parts adjacent to each other. A thickness of a first point of the plurality of coupling parts may be different from a thickness of a second point of the at least one separation part.

In the gasket, the thickness of the second point may be thicker than the thickness of the first point.

In the gasket, the thickness of the second point may be thinner than 1.167 times the thickness of the first point.

In the gasket, the thickness of the second point may be equal to or thicker than 1.033 times the thickness of the first point and may be equal to or thinner than 1.1 times the thickness of the first point.

In the gasket, the thickness of the second point may be equal to 1.067 times the thickness of the first point.

In the gasket, the thickness of the second point may be thickest.

The second point may be defined as a middle point of the two coupling parts adjacent to each other.

In the gasket, a thickness gradient of a section between the two coupling parts adjacent to each other may be symmetric relative to the second point.

In the gasket, the second point may be included within a thickest section of the separation part.

The gasket may include the thickest section that is centrally provided between the two coupling parts adjacent to each other and has an identical thickness to the second point.

A length of the thickest section may be greater than 0.1 times a length between the two coupling parts adjacent to each other and less than 0.15 times the length between the two coupling parts adjacent to each other.

The gasket may include a slope section having a thickness thinner than the thickness of the second point and thicker than the thickness of the first point.

The slope section may include a first slope section adjacent to one coupling part among the two coupling parts adjacent to each other and starting from a point where the thickest section ends and a second slope section adjacent to another coupling part among the two coupling parts adjacent to each other and starting from a point where the thickest section ends.

A length of the first slope section and a length of the second slope section may be equal to a length of the thickest section.

A battery pack according to an example embodiment of the present disclosure may include the battery case according to the present disclosure.

A vehicle according to an example embodiment of the present disclosure may include the battery pack according to the present disclosure.

### Effects of the Invention

According to an aspect of the present disclosure, it is possible to maintain substantially uniform airtightness throughout an entire area in a gasket. As the gasket is directly pressed by a fastening member only at a plurality of coupling parts, a pressed force at a separation part may be relatively lower than at a coupling part. By allowing the thickness of the separation part to be thicker than that of the coupling part, it is possible to ensure airtightness at the plurality of coupling parts in the gasket by being directly pressed through the fastening member, and it is possible to ensure airtightness at the separation part through a thicker thickness. Accordingly, it is possible, when internal pressure of the battery case increases, to prevent gas from leaking to an area corresponding to the separation part between a case lid and the gasket or between a pack frame and the gasket at a pressure lower than a designed venting pressure, allowing gas to be discharged at a targeted location through a venting device.

### Brief Description of Drawings

FIG. 1 is an exploded perspective view of a battery case according to an example embodiment of the present disclosure.
FIG. 2 is a combined perspective view of a battery case according to an example embodiment of the present disclosure.
FIG. 3 is a diagram illustrating a gasket included in a battery case according to an example embodiment of the present disclosure.
FIG. 4 is a diagram illustrating a coupling relation of a pack frame, a case lid, a gasket, and a fastening member included in a battery case according to an example embodiment of the present disclosure.
FIG. 5 is a diagram illustrating a thickness gradient of a gasket included in a battery case according to an example embodiment of the present disclosure.
FIG. 6 is a diagram illustrating a result of a simulation according to Comparative Example 1.
FIG. 7 is a diagram illustrating a result of a simulation according to Example 1 according to the present disclosure.
FIG. 8 is a diagram illustrating a result of a simulation according to Example 2 according to the present disclosure.
FIG. 9 is a diagram illustrating a result of a simulation according to Example 3 according to the present disclosure.
FIG. 10 is a diagram illustrating a result of a simulation according to Example 4 according to the present disclosure.
FIG. 11 is a diagram illustrating a result of a simulation according to Example 5 according to the present disclosure.
FIG. 12 is a diagram illustrating a result of a simulation according to Comparative Example 2.
FIG. 13 is a diagram illustrating a vehicle according to an example embodiment of the present disclosure.

### Mode for Carrying Out the Invention

Before a detailed description of the present disclosure, the terms or words used in this specification and the claims should not be construed as being limited to their general or lexical meanings, and based on the principle that the applicant may properly define the disclosure with a notion of terms in a way that best explains the disclosure, should be interpreted as meanings and notions corresponding to the technical idea of the present disclosure. Accordingly, the example embodiments described in this specification and the configurations shown in the drawings represent merely the most desired embodiments of the present disclosure and do not encompass the entire technical idea of the present disclosure. Therefore, at the point of the present application, the possibility of various equivalents and modified examples that may serve as replacements should be understood.

Identical reference numbers or signs described in each drawing appended to this specification may represent components or elements performing practically the same functions. For the convenience of explanation and understanding, different example embodiments may use the same reference numbers or signs for explanation. In other words, when a plurality of drawings illustrate a component having the same reference number, not all the plurality of drawings may indicate one example embodiment.

In the description below, a singular expression includes a plural expression unless clearly indicated otherwise in context. Terms such as "comprise or include" or "configure" should be understood as indicating the existence of a feature, number, step, operation, element, component, or combination thereof described in this specification, and the terms do not exclude in advance the existence or the possibility of one or more additional features, numbers, steps, operations, elements, components, or combinations thereof.

Furthermore, in the description below, expressions such as above, upper portion, below, lower portion, side surface, frontside, and backside are expressed based on directions shown in drawings, and when a direction of an object changes, the expressions may be expressed differently.

In addition, to distinguish one element from another, terms including ordinals such as "first" and "second" may be used in this specification and claims. Such ordinals are used to distinguish identical or similar elements from each other, and by using such ordinals, the terms should not be construed as having limited meanings. As an example, elements coupled to such ordinals should not be construed as having a limited order of use or order of arrangement by the numbers. As occasion demands, each ordinal may be replaced by each other to be used.

Hereinafter, example embodiments of the present disclosure are described in detail with reference to the accompanying drawings. However, the spirit of the present disclosure may not be limited to suggested example embodiments. For example, a person of ordinary skill in the art who understands the spirit of the present disclosure may suggest other example embodiments included within the scope of the spirit of the present disclosure through adding, modifying, or deleting elements, but it may be understood that such suggestions may be included within the scope of the spirit of the present disclosure. Forms, sizes, and the like of elements in the drawings may be exaggerated for clearer explanation.

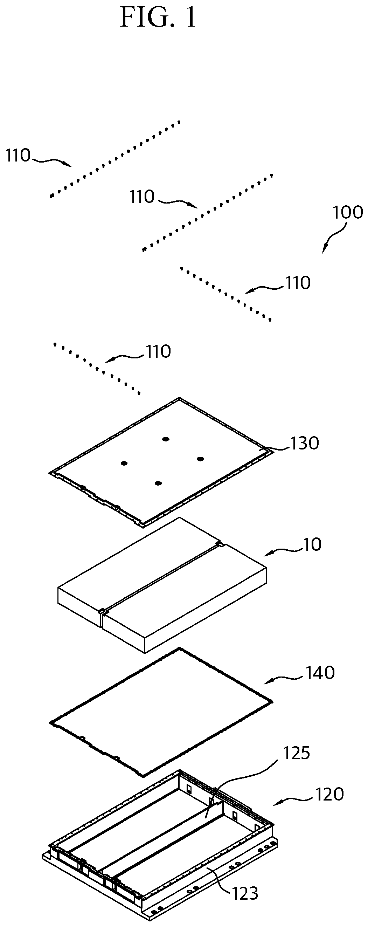

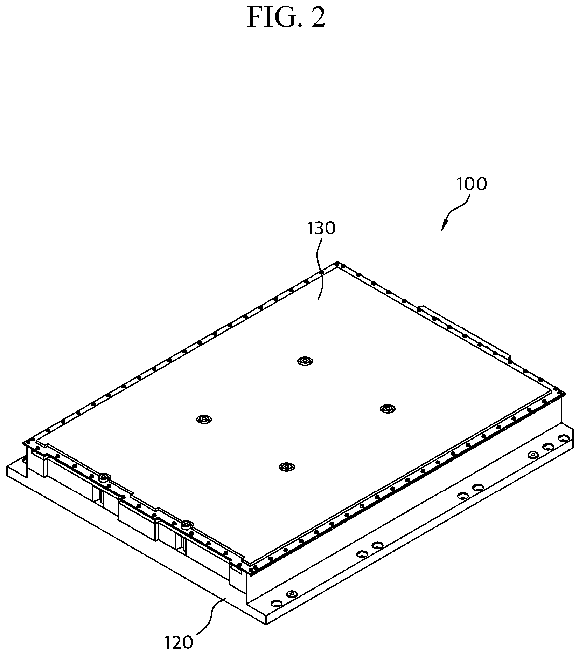

FIG. 1 is an exploded perspective view of a battery case 100 according to an example embodiment of the present disclosure. FIG. 2 is a combined perspective view of the battery case 100 according to an example embodiment of the present disclosure.

Referring to FIGS. 1 and 2, the battery case 100 may include a pack frame 120, a case lid 130, and a gasket 140.

The pack frame 120 may be configured to form an accommodating space for a plurality of battery cells 10. In the accommodating space, a battery module including the plurality of battery cells 10 may be accommodated. For example, when the pack frame 120 accommodates a plurality of the battery modules, the pack frame 120 may be provided with a frame body 123 and a partition wall 125. The frame body 123 may be in a box shape with a top opened and may accommodate the plurality of battery cells 10 inside. The partition wall 125 may divide an interior space of the frame body 123. The partition wall 125 may be provided in a space corresponding to a space between the plurality of battery cells 10 adjacent to each other. Meanwhile, the pack frame 120 is not limited to the structure illustrated and described herein, and for example, the frame body 123 may be composed of a bottom plate, an end plate, a front plate, and a side plate.

The case lid 130 may be configured to cover the accommodating space. The case lid 130 may be in a cover shape covering a top opening portion of a body of the pack frame 120.

The gasket 140 may be interposed between the pack frame 120 and the case lid 130. The gasket 140 may seal a space between the pack frame 120 and the case lid 130. The gasket 140 may be interposed along perimeters of the pack frame 120 and the case lid 130.

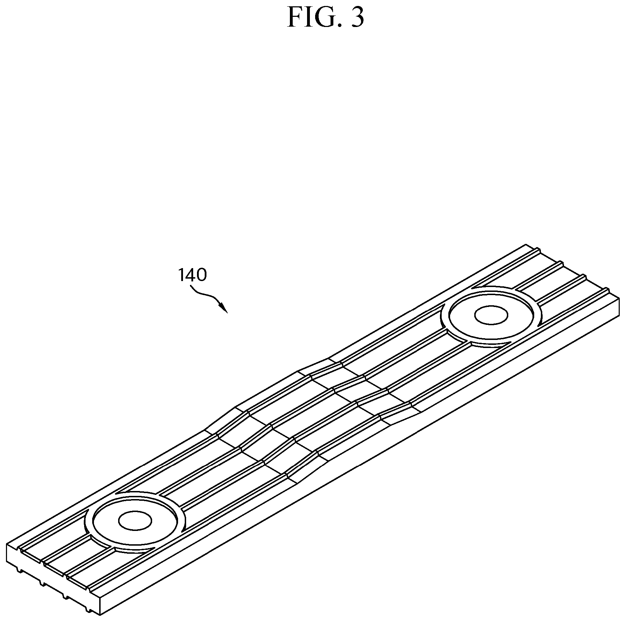

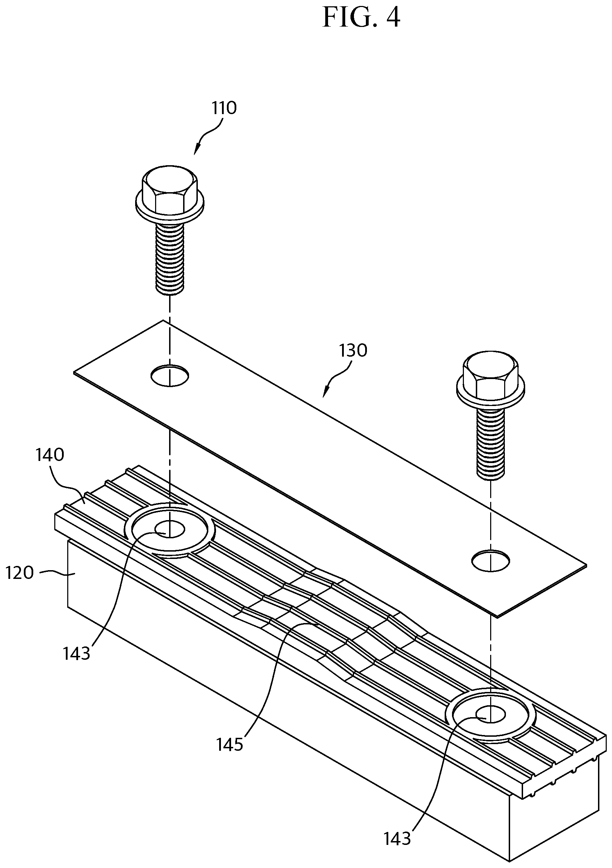

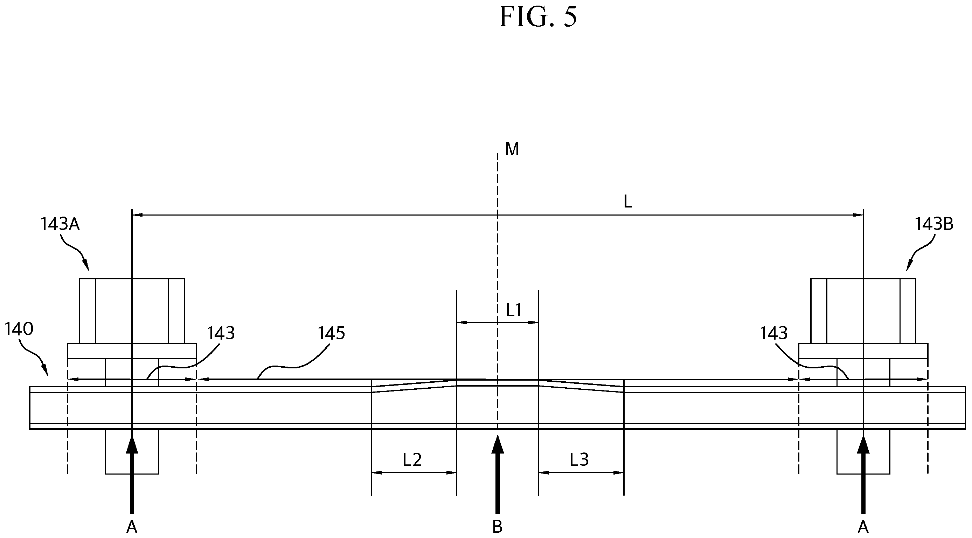

FIG. 3 is a diagram illustrating the gasket 140 included in the battery case 100 according to an example embodiment of the present disclosure. FIG. 4 is a diagram illustrating a coupling relation of the pack frame 120, the case lid 130, the gasket 140, and a fastening member 110 included in the battery case 100 according to an example embodiment of the present disclosure. FIG. 5 is a diagram illustrating a thickness gradient of the gasket 140 included in the battery case 100 according to an example embodiment of the present disclosure.

Referring to FIGS. 3 to 5, the gasket 140 may include a plurality of coupling parts 143 and a separation part 145.

The plurality of coupling parts 143 may be pressed by the fastening member 110. The fastening member 110 may be a screw.

The plurality of coupling parts 143 may have coupling parts 143 adjacent to each other that are spaced apart by a predetermined interval. The coupling part 143 may be an area directly pressed by the fastening member 110 when the fastening member 110 is coupled to the case lid 130.

The separation part 145 may be located between two coupling parts 143 adjacent to each other. The separation part 145 may be an area indirectly pressed by the fastening member 110 when the fastening member 110 is coupled to the case lid 130.

For example, if the fastening member 110 is a screw, the coupling part 143 may be an area that is orthogonally projected onto a bottom surface of a head of the screw, and the separation part 145 may be a remaining area excluding the coupling part 143.

The thickness of a first point A of the coupling part 143 may be different from the thickness of a second point B of the separation part 145. In other words, at least a section of the separation part 145 may have a different thickness from the thickness of the coupling part 143. The thickness of the coupling part 143 may be uniform throughout an entire area. This is for easier coupling when the fastening member 110 is coupled to the coupling part 143.

The thickness of the second point B may be thicker than the thickness of the first point A. In other words, a thickness of at least a section of the separation part 145 may be thicker than the thickness of the coupling part 143.

According to this configuration of the present disclosure, airtightness may be maintained substantially uniform throughout an entire area of the gasket 140. As the gasket 140 is directly pressed by the fastening member 110 only at the plurality of coupling parts 143, a pressing force at the separation part 145 may be relatively lower than at the coupling part 143. By allowing the thickness of the separation part 145 to be thicker than that of the coupling part 143, airtightness may be ensured at the plurality of coupling parts 143 of the gasket 140 being directly pressed by the fastening member 110, and airtightness may be ensured at the separation part 145 through a thicker thickness. Accordingly, it is possible, when internal pressure of the battery case 100 increases, to prevent gas from leaking to an area corresponding to the separation part 145 between the case lid 130 and the gasket 140 or between the pack frame 120 and the gasket 140 at a pressure lower than a designed venting pressure, allowing gas to be discharged at a targeted location through a venting device even when the internal pressure increases more later to be higher pressure than the venting pressure.

As described above, the separation part 145 may have a thickness configured to be pressed to the same or a similar extent as an area of the coupling part 143. In other words, when the thickness of the separation part 145 is configured to be excessively thick, airtightness may rather decrease, so an appropriate thickness setting is required.

Accordingly, for the appropriate thickness setting of the separation part 145, a simulation was conducted. The simulation was conducted for the case where the thickness of the case lid 130 is set to 2 millimeters (mm), the thickness of the coupling part 143 of the gasket 140 is set to 3mm, and the fastening member 110 is fastened with a torque of 10 newton meters (Nm). In such a case, a minimum value of a contact pressure of the gasket 140 at an area between two coupling parts 143 adjacent to each other was measured, while adjusting the thickness of the separation part 145. A result of the measurement is as shown below.

| | Thickness of coupling part (mm) | Thickness of separation part (mm) | Ratio of thickness of separation part to thickness of coupling part (%) | Contact pressure of gasket (MPa) | Rate of increase of contact pressure relative to comparative example (%) |
|---|---|---|---|---|---|
| Comparative Example 1 | 3 | 3 | 100 | 5 | 0 |
| Example 1 | 3 | 3.1 | 103.3 | 5.6 | 12 |
| Example 2 | 3 | 3.2 | 106.7 | 6.1 | 22 |
| Example 3 | 3 | 3.3 | 110 | 5.9 | 18 |
| Example 4 | 3 | 3.4 | 113.3 | 5.6 | 12 |
| Example 5 | 3 | 3.5 | 116.7 | 5.2 | 4 |
| Comparative Example 2 | 3 | 3.6 | 120 | 4.8 | -4 |

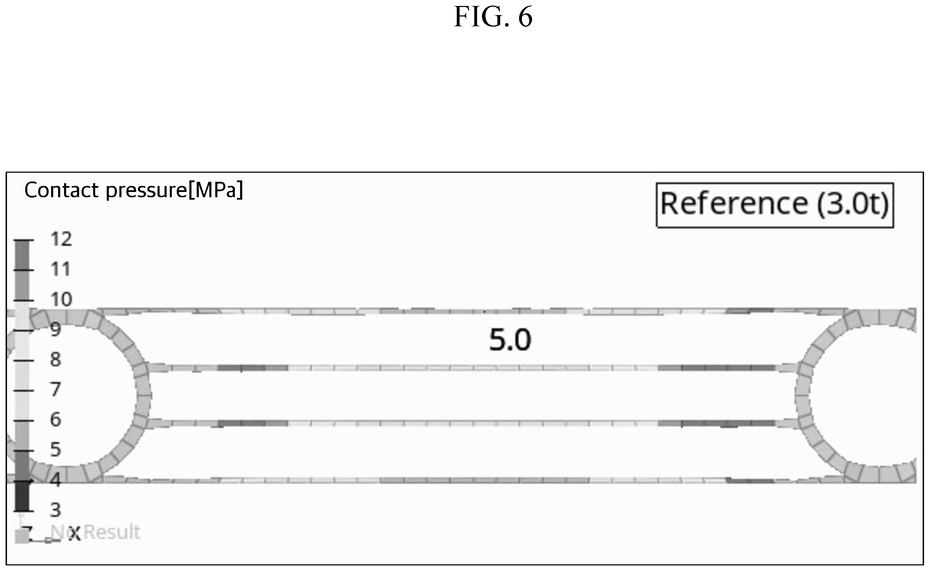

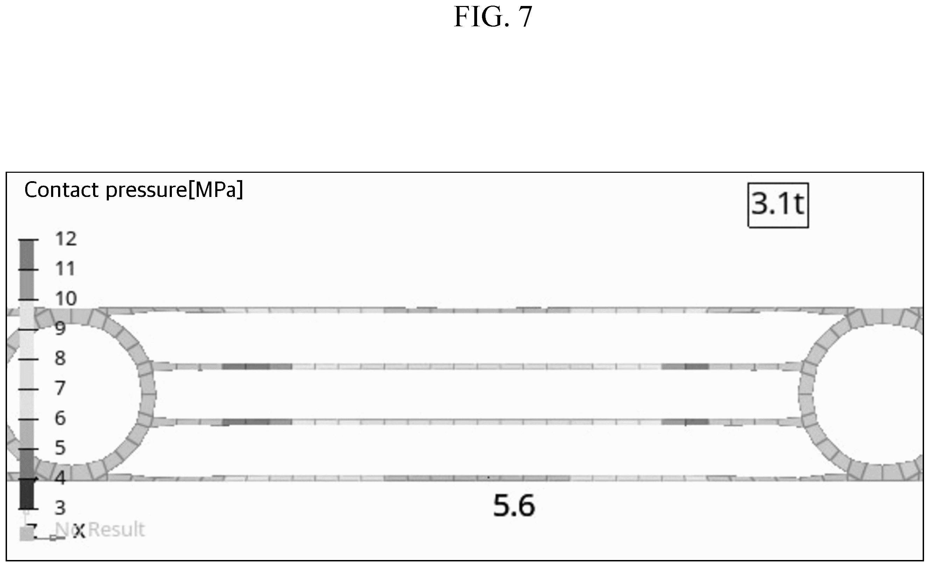

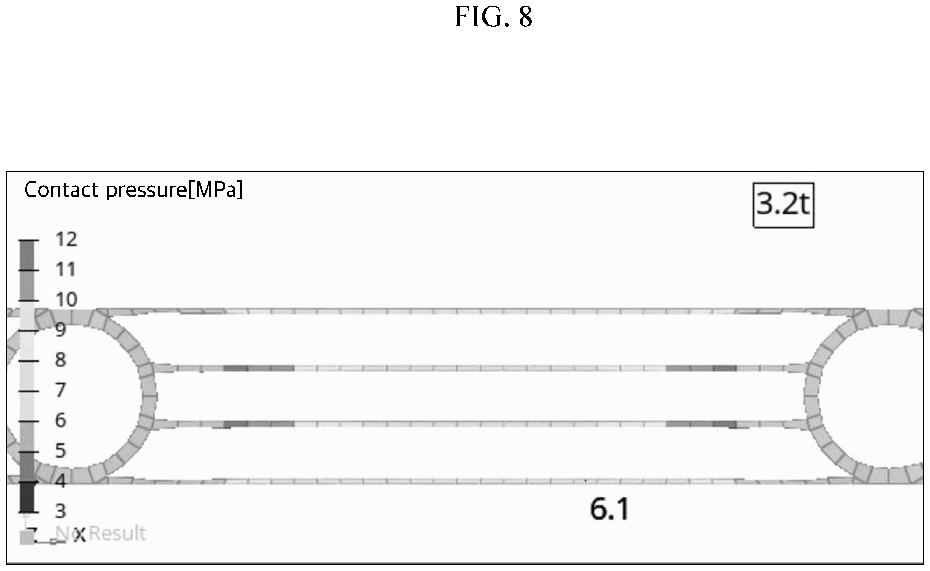

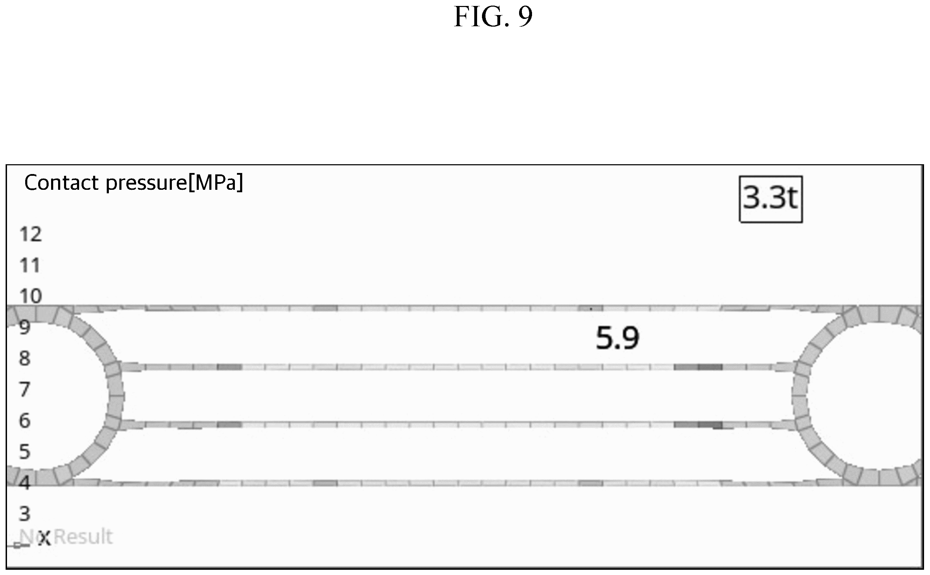

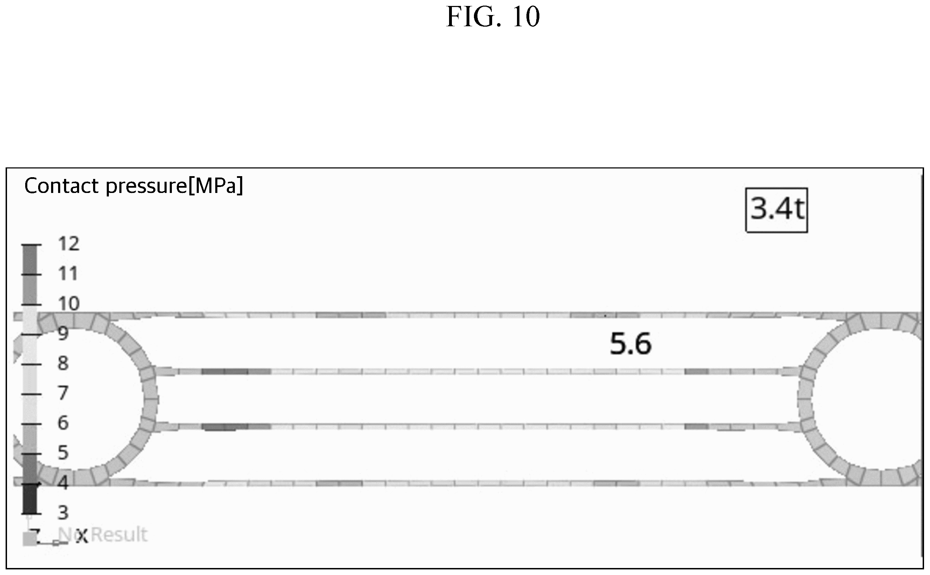

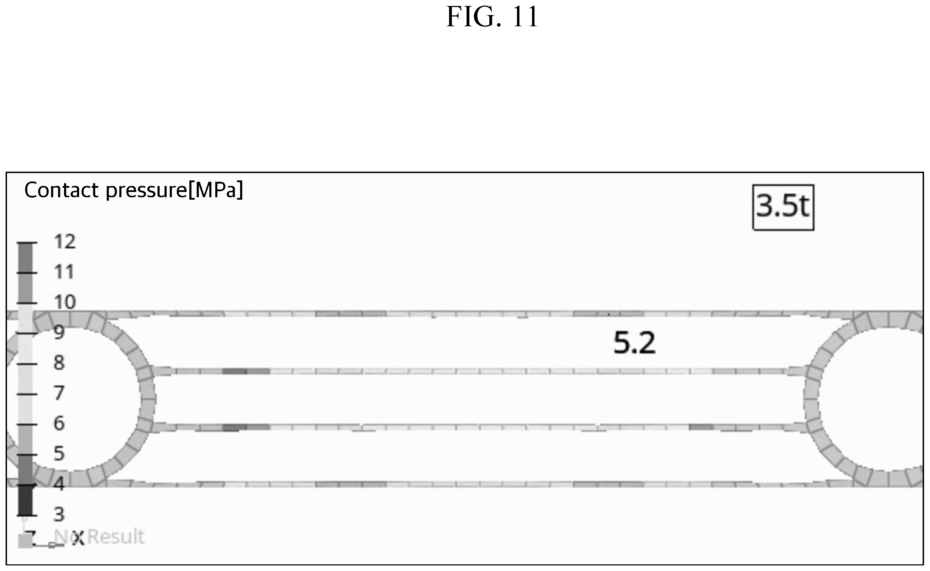

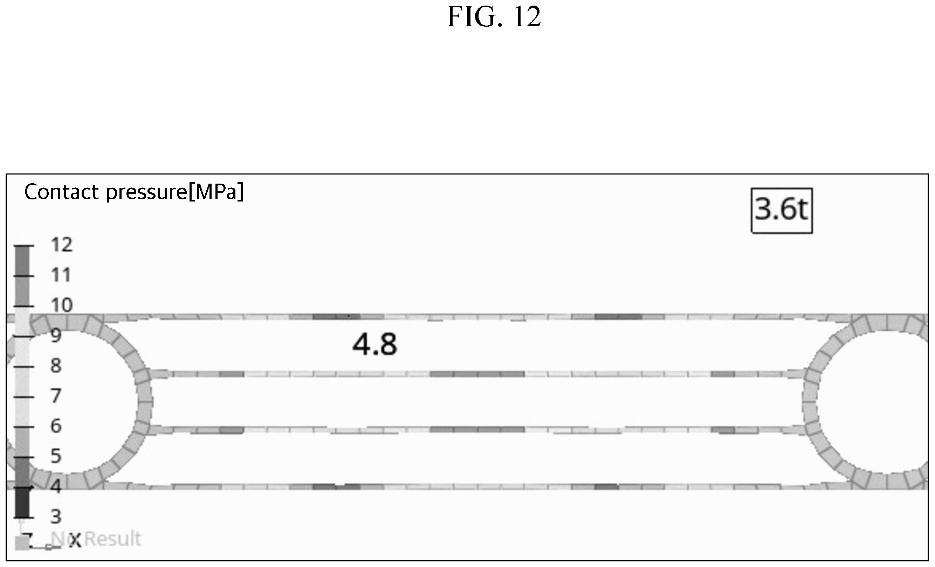

FIG. 6 is a diagram illustrating a result of a simulation according to Comparative Example 1. FIG. 7 is a diagram illustrating a result of a simulation according to Example 1 according to the present disclosure. FIG. 8 is a diagram illustrating a result of a simulation according to Example 2 according to the present disclosure. FIG. 9 is a diagram illustrating a result of a simulation according to Example 3 according to the present disclosure. FIG. 10 is a diagram illustrating a result of a simulation according to Example 4 according to the present disclosure. FIG. 11 is a diagram illustrating a result of a simulation according to an Example 5 according to the present disclosure. FIG. 12 is a diagram illustrating a result of a simulation according to Comparative Example 2.

Referring to FIGS. 6 to 12, the results of the simulation according to Comparative Examples and Examples according to the present disclosure are described.

In Comparative Example 1 where the thickness of the second point B of the separation part 145 and the thickness of the first point A of the coupling part 143 are identically set to 3mm, the minimum value of the contact pressure of the gasket 140 was measured as 5 mega-pascal (Mpa).

In Example 1 where the thickness of the second point B of the separation part 145 is set to 1.033 times the thickness of the first point A of the coupling part 143, the contact pressure of the gasket 140 increased by 12% compared to Comparative Example 1.

In the Example 2 where the thickness of the second point B of the separation part 145 is set to 1.067 times the thickness of the first point A of the coupling part 143, the contact pressure of the gasket 140 increased by 22% compared to Comparative Example 1.

In Example 3 where the thickness of the second point B of the separation part 145 is set to 1.1 times the thickness of the first point A of the coupling part 143, the contact pressure of the gasket 140 increased by 18% compared to Comparative Example 1.

In Example 4 where the thickness of the second point B of the separation part 145 is set to 1.133 times the thickness of the first point A of the coupling part 143, the contact pressure of the gasket 140 increased by 12% compared to Comparative Example 1.

In Example 5 where the thickness of the second point B of the separation part 145 is set to 1.167 times the thickness of the first point A of the coupling part 143, the contact pressure of the gasket 140 increased by 4% compared to Comparative Example 1.

In Comparative Example 2 where the thickness of the second point B of the separation part 145 is set to 1.2 times the thickness of the first point A of the coupling part 143, the contact pressure of the gasket 140 decreased by 4% compared to Comparative Example 1.

When looking into the entire simulation data, when the thickness of the second point B of the separation part 145 is set to 1.067 times the thickness of the first point A of the coupling part 143, the contact pressure of the gasket 140 increased the most compared to Comparative Example 1. In addition, according to Comparative Example 2, when the thickness of the second point B of the separation part 145 is set to 1.2 times the thickness of the first point A of the coupling part 143, the contact pressure rather decreased compared to Comparative Example 1.

Accordingly, to increase the contact pressure of the gasket 140 compared to Comparative Example 1, the thickness of the separation part 145 may meet the numerical ranges below.

The thickness of the second point B may be thicker than the thickness of the first point A and equal to or thinner than 1.167 times the thickness of the first point A.

The thickness of the second point B may be thicker than the thickness of the first point A and equal to or thinner than 1.133 times the thickness of the first point A.

The thickness of the second point B may be thicker than the thickness of the first point A and equal to or thinner than 1.1 times the thickness of the first point A.

The thickness of the second point B may be thicker than the thickness of the first point A and equal to or thinner than 1.067 times the thickness of the first point A.

The thickness of the second point B may be equal to or thicker than 1.033 times the thickness of the first point A and equal to or thinner than 1.167 times the thickness of the first point A.

The thickness of the second point B may be equal to or thicker than 1.033 times the thickness of the first point A and equal to or thinner than 1.133 times the thickness of the first point A.

The thickness of the second point B may be equal to or thicker than 1.033 times the thickness of the first point A and equal to or thinner than 1.1 times the thickness of the first point A.

The thickness of the second point B may be equal to or thicker than 1.033 times the thickness of the first point A and equal to or thinner than 1.067 times the thickness of the first point A.

The thickness of the second point B may be equal to or thicker than 1.067 times the thickness of the first point A and equal to or thinner than 1.167 times the thickness of the first point A.

The thickness of the second point B may be equal to or thicker than 1.067 times the thickness of the first point A and equal to or thinner than 1.133 times the thickness of the first point A.

The thickness of the second point B may be equal to or thicker than 1.067 times the thickness of the first point A and equal to or thinner than 1.1 times the thickness of the first point A.

The thickness of the second point B may be equal to or thicker than 1.1 times the thickness of the first point A and thinner than 1.167 times the thickness of the first point A.

The thickness of the second point B may be equal to or thicker than 1.1 times the thickness of the first point A and equal to or thinner than 1.133 times the thickness of the first point A.

The thickness of the second point B may be equal to or thicker than 1.133 times the thickness of the first point A and equal to or thinner than 1.167 times the thickness of the first point A.

Preferably, the thickness of the second point B may be equal to or thicker than 1.033 times the thickness of the first point A and equal to or thinner than 1.133 times the thickness of the first point A.

Preferably, the thickness of the second point B may be equal to or thicker than 1.033 times the thickness of the first point A and equal to or thinner than 1.1 times the thickness of the first point A.

Preferably, the thickness of the second point B may be equal to or thicker than 1.067 times the thickness of the first point A and equal to or thinner than 1.1 times the thickness of the first point A.

Preferably, the thickness of the second point B may be 1.067 times the thickness of the first point A.

Referring to FIG. 5 again, the gasket 140 used in the simulation is described in more detail.

In the gasket 140, the thickness of the second point B may be the thickest. The second point B may be defined as a middle point M of two coupling parts 143A and 143B adjacent to each other.

In the gasket 140, a thickness gradient of a section between the two coupling parts 143A and 143B adjacent to each other may be symmetric relative to the second point B.

The gasket 140 may include a thickest section L1. The second point B may be included within the thickest section L1. The thickest section L1 may be centrally provided between the two coupling parts 143A and 143B adjacent to each other.

Areas L1, L2, and L3 of FIG. 5 having different thicknesses in the gasket 140 may have a uniform margin area from a boundary of the adjacent coupling part 143. The margin area may refer to an area having an identical thickness to the thickness of the coupling part 143 in the separation part 145. When the areas L1, L2, and L3 having different thicknesses are located at a middle portion of the separation part 145, the margin area may be provided on each side between the two adjacent coupling parts 143. As an area adjacent to the coupling part 143 in the separation part 145 may significantly ensure airtightness as being indirectly pressed by the fastening member 110 according to a material property of the gasket 140, a middle area of the separation part 145 having relatively low airtightness may mainly have a different thickness.

For example, the length of the thickest section L1 may be longer than 0.1 times a length L between the two coupling parts 143A and 143B adjacent to each other and shorter than 0.15 times the length L between the two coupling parts 143A and 143B adjacent to each other. In a simulation model, the length L between the two coupling parts 143A and 143B is set to 70 mm and the length of the thickest section L1 to 8mm.

The gasket 140 may include a slope section. The slope section may be thinner than the thickness of the second point B and thicker than the thickness of the first point A. In other words, the slope section may be thinner than the thickness of the thickest section L1 and thicker than the thickness of the coupling part 143.

The slope section may include a first slope section L2 and a second slope section L3. The first slope section L2 may be adjacent to one coupling part 143A among the two coupling parts 143A and 143B adjacent to each other and start from a point where the thickest section L1 ends. The second slope section L3 may be adjacent to another coupling part 143B among the two coupling parts 143A and 143B adjacent to each other and start from a point where the thickest section L1 ends.

The length of the first slope section L2 may be identical to the length of the thickest section L1. The length of the second slope section L3 may be identical to the length of the thickest section L1. In the simulation model, the length of the first slope section L2 and the length of the second slope section L3 are set to 8mm to be identical to the length of the thickest section L1.

As another example embodiment, by configuring the gasket 140 to include a slope section that forms a gradual slope from the second point B of the separation part 145 to a boundary of the coupling part 143, in other words, not to have a margin area, airtightness thereof may be ensured.

As another example embodiment, as the aforementioned areas having different thicknesses may be in a curve form as a whole, not a straight slope, the thickness may gradually increase or decrease to minimize the occurrence of a discontinuous protruding part.

Referring to FIG. 1 again, a battery pack 3 may include the battery case 100. Although not illustrated in the drawings, the battery pack 3 may further include other various elements in addition to the plurality of battery cells 10 and the battery case 100, for example, a battery management system (BMS), a relay, and a current sensor, which are elements of the battery pack 3 known at the time of application of the present disclosure.

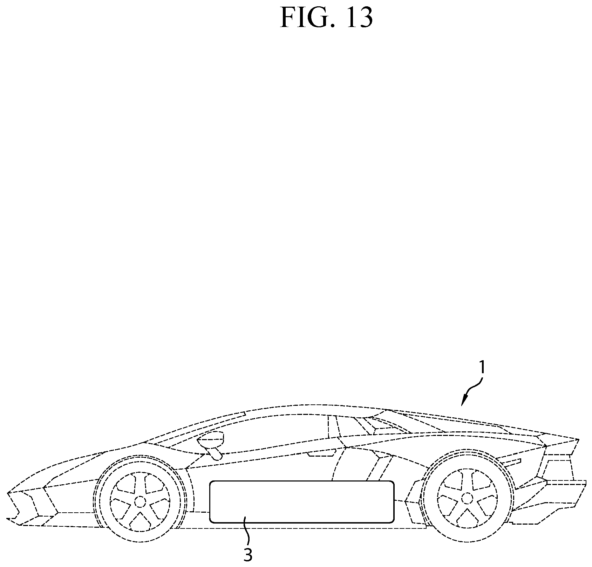

FIG. 13 is a diagram illustrating a vehicle 1 according to an example embodiment of the present disclosure.

Referring to FIG. 13, the vehicle 1 may include the battery pack 3. The vehicle 1 may further include other various elements included in the vehicle 1 in addition to the battery pack 3. For example, the vehicle 1 may further include a car body, a motor, or a control device such as an electronic control unit (ECU), in addition to the battery pack 3 according to the present disclosure.

As described above, example embodiments of the present disclosure are described referring to the accompanying drawings, but it is obviously understood by those skilled in the art that various and clear multiple modifications included within the spirit and scope of the present disclosure are possible from the above description. Accordingly, the scope of the present disclosure should be construed by the appended claims described to include such multiple modifications.

### [Description of Symbols]

1 Vehicle
3 Battery pack
10 Battery cell
100 Battery case
110 Fastening member
120 Pack frame
123 Frame body
125 Partition wall
130 Case lid
140 Gasket
143 Coupling part
143A One coupling part
143B Another coupling part
A First point
145 Separation part
B Second point
M Middle point
L Length between two coupling parts adjacent to each other
L1 Thickest section
L2 First slope section
L3 Second slope section

## Claims

1. A battery case, comprising:
a pack frame configured to form an accommodating space for a plurality of battery cells;
a case lid configured to cover the accommodating space; and
a gasket interposed between the pack frame and the case lid,
wherein the gasket comprises:
a plurality of coupling parts that are areas pressed by a fastening member; and
at least one separation part located between two coupling parts adjacent to each other, and
wherein a thickness of a first point of the plurality of coupling parts is different from a thickness of a second point of the at least one separation part.

2. The battery case of claim 1,
wherein, in the gasket,
the thickness of the second point is thicker than the thickness of the first point.

3. The battery case of claim 2,
wherein, in the gasket,
the thickness of the second point is thinner than 1.167 times the thickness of the first point.

4. The battery case of claim 3,
wherein, in the gasket,
the thickness of the second point is equal to or thicker than 1.033 times the thickness of the first point and is equal to or thinner than 1.1 times the thickness of the first point.

5. The battery case of claim 3,
wherein, in the gasket,
the thickness of the second point is equal to 1.067 times the thickness of the first point.

6. The battery case of claim 2,
wherein, in the gasket,
the thickness of the second point is thickest.

7. The battery case of claim 6,
wherein the second point
is defined as a middle point of the two coupling parts adjacent to each other.

8. The battery case of claim 7,
wherein, in the gasket,
a thickness gradient of a section between the two coupling parts adjacent to each other is symmetric relative to the second point.

9. The battery case of claim 8,
wherein, in the gasket,
the second point is included within a thickest section of the separation part.

10. The battery case of claim 9,
wherein a length of the thickest section is
greater than 0.1 times a length between the two coupling parts adjacent to each other and less than 0.15 times the length between the two coupling parts adjacent to each other.

11. A battery pack case of claim 9,
wherein the gasket
includes a slope section having a thickness thinner than the thickness of the second point and thicker than the thickness of the first point.

12. The battery pack case of claim 11,
wherein the slope section includes:
a first slope section adjacent to one coupling part among the two coupling parts adjacent to each other and starting from a point where the thickest section ends; and a second slope section adjacent to another coupling part among the two coupling parts adjacent to each other and starting from a point where the thickest section ends.

13. The battery pack case of claim 12,
wherein a length of the first slope section and a length of the second slope section
are equal to a length of the thickest section.

14. A battery pack comprising the battery pack case according to any one of claims 1 to 13.

15. A vehicle comprising the battery pack according to claim 14.
